# EUROPEAN PATENT APPLICATION

(11) **EP 4 721 957 A1**
(43) Date of publication of application: **08.04.2026**
(21) Application number: 25199895.1
(22) Date of filing: 03.09.2025
(51) Int. Cl.: B29C 64/295, B29C 64/112, B29C 64/118, B29C 64/232, B29C 64/245, B29C 64/25, B29C 64/255, B29C 64/364, B29C 64/393, B33Y 30/00, B33Y 40/00

(54) **DYNAMIC-VOLUME HIGH-TEMPERATURE HEATING CHAMBER APPARATUS FOR 3D PRINTER**

(30) Priority: 19.09.2024 CN 202422282937 U
(71) Applicant: Henan Creatbot technology Limited, Zhengzhou City Henan 450001 (CN)
(72) Inventor: ZHANG, Jixiang, Zhengzhou City, Henan Province, 450001 (CN); WANG, Yike, Zhengzhou City, Henan Province, 450001 (CN); FAN, Liye, Zhengzhou City, Henan Province, 450001 (CN); REN, Shixiong, Zhengzhou City, Henan Province, 450001 (CN)
(74) Representative: Santarelli

(57) **Abstract**

A dynamic-volume high-temperature heating chamber apparatus for a 3D (three-dimensional) printer is provided, and belongs to the field of 3D printers. The dynamic-volume high-temperature heating chamber apparatus for a 3D printer includes a cuboid printing chamber and a lifting printing platform that separates the printing chamber into a heating chamber and an expansion chamber, where a sealing structure is disposed between an edge of the lifting printing platform and the printing chamber. A printing head is disposed in the heating chamber, and a heating apparatus is disposed in the heating chamber. Beneficial effects are as follows. In an existing 3D printing device, an entire printing chamber needs to be heated, and energy consumption is extremely high. The lifting printing platform with the sealing structure is disposed in this apparatus, and the printing chamber is split into the heating chamber and the expansion chamber by using the lifting printing platform. Therefore, in a preheating process, only a minimum heating chamber between the printing platform and the upper bellows fabric for heat insulation is heated, so that the heating chamber quickly reaches a required temperature, and preheating time and power consumption are greatly reduced. In addition, as the printing platform moves down, a volume of the heating chamber continuously increases, so that printing and cyclic heating are simultaneously performed, and printing efficiency is greatly improved.

## Description

### Technical Field

The present disclosure relates to a dynamic-volume high-temperature heating chamber apparatus for a 3D (three-dimensional) printer, and belongs to the technical field of 3D printers.

### Background of the Invention

Currently, a 3D printer with a heat insulation chamber is usually a chamber structure with fixed space. This chamber structure is easy to implement, has been widely used in the oven industry, and is very mature. Currently, in this type of printer, a printing platform, moving parts, a sprinkler, and other components are usually placed in a printing bin. For example, the FUNMAT series printer of Shanghai INTAMSYS Technology Co. Ltd. can implement a chamber temperature of up to 120°C. Components such as a motor, a guide rail, and a synchronization belt are disposed inside the chamber, and the chamber temperature is limited to a temperature limit of these components, so that it is difficult to further increase the chamber temperature in this solution. Therefore, printing of a high-performance material cannot be well implemented in this manner.

Another preferred practice is to place all parts except a printing platform and a nozzle outside a printing cabin, so that the chamber temperature may not be limited to a temperature limit of another part. For example, the Fortus series printer of Stratasys can have a chamber temperature of above 250°C. However, because a chamber space is constant, all of the chamber needs to be heated to 250°C before printing. This requires great heater power and long waiting time. F900 of Stratasys is used as an example. An effective printing size is 914×610×914mm, and heater power is up to 12 KW. As a result, a chamber of this structure has long preheating time, relatively low heating efficiency, and a serious waste of heating space. Even if a very small model is printed, a large amount of power needs to be consumed to wait for a long time to warm up.

### Summary of the Invention

An object of the present disclosure is to provide a dynamic-volume high-temperature heating chamber apparatus for a 3D printer, which can effectively solve the above problem.

To solve the above technical problem, the present disclosure is realized through following technical solutions.

The apparatus includes a cuboid printing chamber and a lifting printing platform that separates the printing chamber into a heating chamber and an expansion chamber, where a sealing structure is disposed between an edge of the lifting printing platform and the printing chamber. A printing head is disposed in the heating chamber, and a heating apparatus is disposed in the heating chamber.

Further, the sealing structure includes a sealing strip.
further, the heating apparatus includes a fan, and an air inlet channel and an air outlet channel that communicate with the fan, and an air inlet of the air inlet channel and an air outlet of the air outlet channel are both disposed in the heating chamber.

Further, the air inlet channel includes a lifting air inlet apparatus and an air inlet chamber that communicates with the lifting air inlet apparatus. The lifting air inlet apparatus includes an air inlet pipe with two penetrating sides. A lower end of the air inlet pipe is fastened to the lifting printing platform. A bellows fabric is disposed on an upper end and a lower end of the air inlet pipe. The other end of the bellows fabric is fastened to the printing chamber. The air inlet chamber is composed of a rectangular box body. One side of the air inlet chamber communicates with the interior of the printing chamber, and the other side of the air inlet chamber communicates with an air inlet of the fan.

Further, the air outlet channel includes an air outlet tank that communicates with the heating chamber. An electric heating tube is disposed in the air outlet tank. A lower end of the air outlet tank communicates with an output end of the fan.

Further, a driving assembly is further disposed on the lifting printing platform, and the driving assembly includes a lifting block and steel belt mechanisms that are connected to the lifting printing platform. There are two steel belt mechanisms, and each of the steel belt mechanisms includes upper and lower fixed pulleys and a steel belt disposed on the fixed pulleys. The lifting block and the steel belt are connected by using a fixed block.

A driving plate is further disposed on the steel belt, and a driving apparatus is disposed on the driving plate. A through slot for the lifting block to move up and down is disposed on a rear end of the printing chamber.

The apparatus has the following beneficial effects.

In an existing device, the entire printing chamber needs to be heated, but a volume in the printing chamber is too large, time for heating up is long, and energy consumption is extremely high. Therefore, the lifting printing platform with the sealing structure is disposed in the apparatus, and the printing chamber is split into the heating chamber and the expansion chamber by using the lifting printing platform.

When in use, a position of the lifting printing platform is first close to the printing head located at the top of the printing chamber, and then air in the heating chamber is heated by using the heating apparatus. In this case, the heating chamber has a small volume, heating time is very short, and less energy is consumed. Then, as the printing product is gradually formed, the lifting printing platform also gradually lifts down, and a volume of the expansion chamber in the printing chamber becomes smaller, and a volume of the heating chamber increases.

An advantage of this apparatus is that a space is used for a time change, and printing can be started only by preheating a minimum chamber between a platform and an upper bellows fabric for heat insulation. As printing goes on, the platform gradually lifts down, and the chamber gradually becomes larger, and synchronous heating is continuously performed on the enlarged chamber. In this manner, preheating time and power consumption can be greatly saved, and 80% of preheating time and power consumption are expected to be saved.

### Brief Description of the Drawings

For ease of description, the present disclosure is described in detail by using the following specific implementations and drawings.
FIG. 1 is a structure diagram according to the present disclosure;
FIG. 2 is a structure chart of a printing chamber according to the present disclosure;
FIG. 3 is a cross-section diagram of a printing chamber according to the present disclosure;
FIG. 4 is a part drawing of a lifting air inlet apparatus according to the present disclosure; and
FIG. 5 is a part drawing of a driving assembly according to the present disclosure.

Reference numerals in the drawings:
1: printing chamber; 2: heating chamber; 4: expansion chamber; 5: lifting printing platform; 6: sealing strip; 7: heating apparatus; 71: fan; 72: air inlet; 73: air outlet; 74: lifting air inlet apparatus; 741: air inlet pipe; 742: bellows fabric; 75: air inlet chamber; 76: air outlet tank; 77: electric heating tube; 8: driving assembly; 81: through slot; 82: lifting block; 83: steel belt mechanism; 831: fixed pulley; 832: steel belt; 84: fixed block; and 85: driving plate.

### Detailed Description of Embodiments

Embodiments of the present disclosure are described in detail below, and examples of the embodiments are shown in drawings. The embodiments described below by reference to the drawings are exemplary only used for explaining the present disclosure and are not to be construed as limiting the present disclosure.

It needs to be illustrated that, in the description of the present disclosure, except as otherwise noted, the meaning of "a plurality of" is two or more than two; and the indicative direction or position relations of the terms such as "upper", "lower", "left", "right", "inside", "outside", "front end", "rear end", "head" and "tail" are direction or position relations illustrated based on the accompanying diagrams, just for facilitating the description of the present disclosure and simplifying the description, but not for indicating or hinting that the indicated device or element must be in a specific direction and is constructed and operated in the specific direction, the terms cannot be understood as the restriction of the present disclosure.

Moreover, the terms such as "first", "second" and "third" are just used for distinguishing the description, but cannot be understood to indicate or hint relative importance.

In addition, in the description of the present disclosure, except as otherwise noted, the terms such as "link" and "connect" should be generally understood. For example, the components can be fixedly connected, and also can be detachably connected or integrally connected; the components can be mechanically connected, and also can be electrically connected; and the components can be directly connected, and also can be indirectly connected through an intermediate. For any person skilled in the art, the specific meanings of the terms in the present disclosure can be understood according to specific conditions.

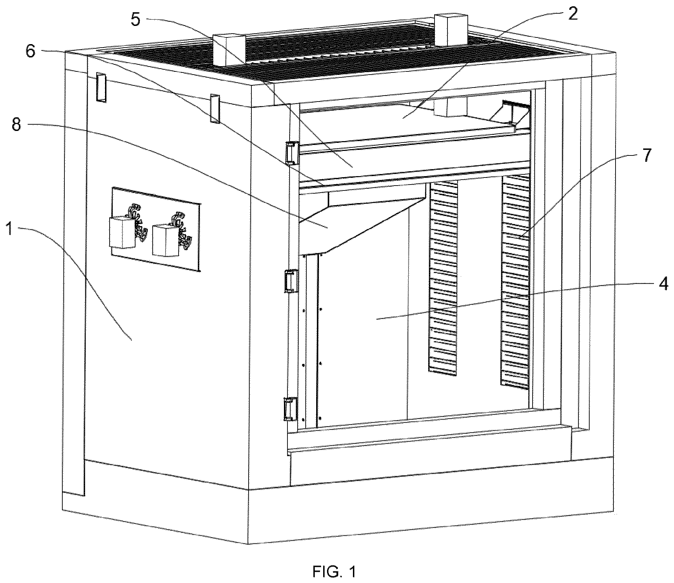

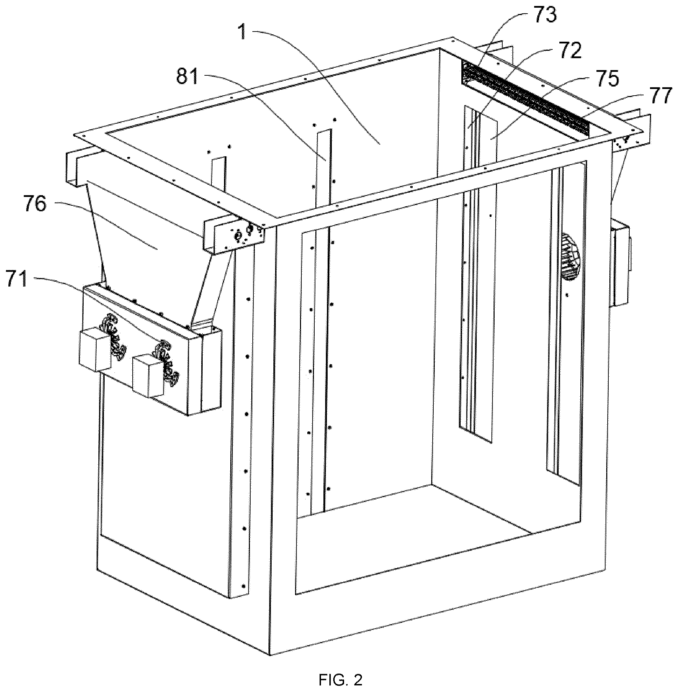

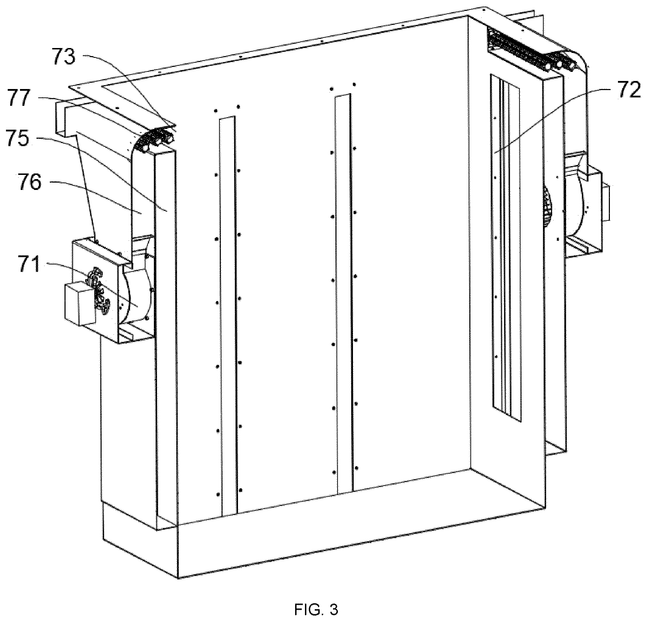

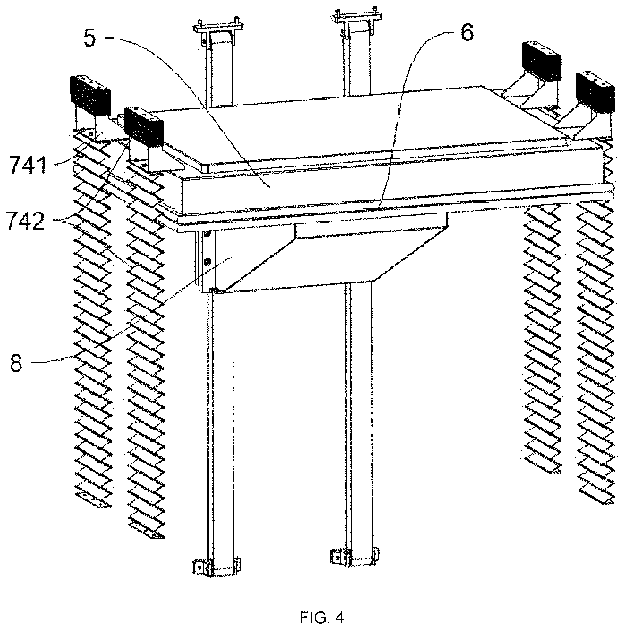

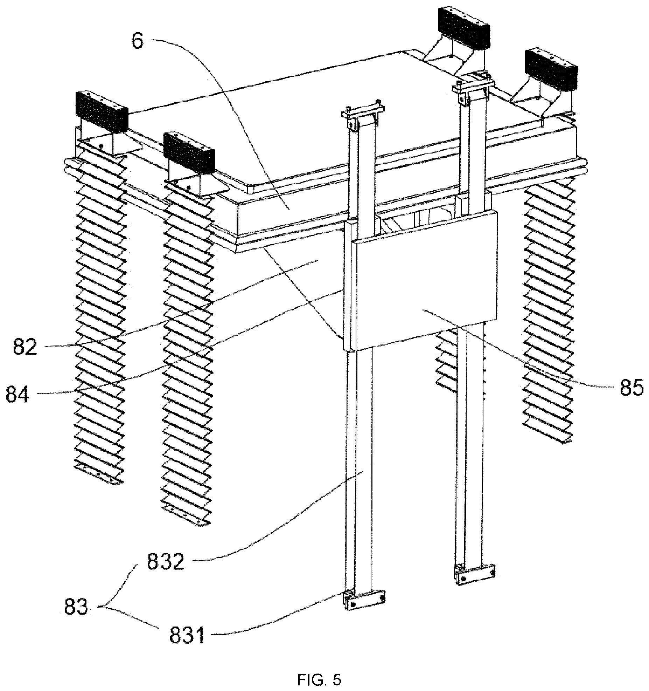

Referring to FIG. 1 to FIG. 5, a dynamic-volume high-temperature heating chamber apparatus for a 3D printer is provided in an embodiment of the present disclosure.

The apparatus includes a cuboid printing chamber 1 and a lifting printing platform 5 that separates the printing chamber 1 into a heating chamber 2 and an expansion chamber 4, where a sealing structure is disposed between an edge of the lifting printing platform 5 and the printing chamber 1; and a printing head is disposed in the heating chamber 2, and a heating apparatus 7 is disposed in the heating chamber 2.

The printing chamber 1 of this apparatus is mainly used for 3D printing. Specifically, when printing, the printing head needs to be operated to move, and then a product is printed on a printing platform on an upper end of the lifting printing platform 5. In addition, a printing environment of the product requires a high temperature, and the temperature needs to be between 100°C and 300°C. In an existing device, the entire printing chamber 1 needs to be heated, but a volume in the printing chamber 1 is too large, time for heating up is long, and energy consumption is extremely high. Therefore, the lifting printing platform 5 with the sealing structure is disposed in this apparatus, and the printing chamber 1 is split into the heating chamber 2 and the expansion chamber 4 by using the lifting printing platform 5.

In this way, when in use, a position of the lifting printing platform 5 is first close to the printing head located at the top of the printing chamber 1, and then air in the heating chamber 2 is heated by using the heating apparatus 7. In this case, the heating chamber 2 has a small volume, heating time is very short, and less energy is consumed. Then, as the printing product is gradually formed, the lifting printing platform 5 also gradually lifts down, and a volume of the expansion chamber 4 in the printing chamber 1 becomes smaller, and a volume of the heating chamber 2 increases.

Compared with the prior art in which the entire printing chamber 1 is directly heated, this apparatus can greatly reduce heating time, and reduce energy consumption, thereby reducing printing costs.

Specifically, the sealing structure includes a sealing strip 6. The sealing strip 6 is in contact with an inner wall of the printing chamber 1. With lifting of the printing platform 5, the sealing strip 6 also performs dynamic friction on the inner wall of the printing chamber 1, and continues to seal the entire heating chamber 2.

The heating apparatus 7 of this apparatus includes a fan 71, and an air inlet channel and an air outlet channel that communicate with the fan 71. An air inlet 72 of the air inlet channel and an air outlet 73 of the air outlet channel are both disposed in the heating chamber 2.

In this way, both the air inlet 72 and the air outlet 73 are disposed in the heating chamber 2, so that cyclic heating can be implemented. Hot air located in the heating chamber 2 is drawn out by using the air inlet 72 through the fan 71, and then heated and supplemented into the heating chamber 2 by using the air outlet 73. Cyclic heating can reduce energy consumption.

However, considering that the heating chamber 2 of this apparatus is gradually expanded, and hot air is aggregated upward. Therefore, to enable the fan 71 to draw out air with a relatively low temperature, a position of the air inlet 72 is bound to the lifting printing platform 5. That is, when the lifting printing platform 5 lifts up and down, the position of the air inlet 72 also lifts up and down. In this way, low-temperature air may be drawn to perform heating, and a temperature in the heating chamber 2 may be rapidly increased evenly by introducing hot air.

Specifically, the air inlet channel includes a lifting air inlet apparatus 74 and an air inlet chamber 75 that communicates with the lifting air inlet apparatus 74. The lifting air inlet apparatus 74 includes an air inlet pipe 741 with two penetrating sides. A lower end of the air inlet pipe 741 is fastened to the lifting printing platform 5. A bellows fabric 742 is disposed on an upper end and a lower end of the air inlet pipe 741, and the other end of the bellows fabric 742 is fastened to the printing chamber 1. The air inlet chamber 75 is composed of a rectangular box body. One side of the air inlet chamber 75 communicates with the interior of the printing chamber 1, and the other side of the air inlet chamber 75 communicates with an air inlet of the fan 71.

When the lifting printing platform 5 lifts down, a part of the expansion chamber 4 is expanded into the heating chamber 2. In this case, the air inlet pipe 741 on the lifting printing platform 5 starts to extract air just expanded into the space of the heating chamber 2, and the air enters into the air inlet chamber 75 by using the air inlet pipe 741. Then, the air is drawn out by using the fan 71. After the air is drawn out, the air is heated and blown into the heating chamber 2 from the air outlet 73.

The air inlet chamber 75 is very large in volume, and is composed of the rectangular box body in shape. A reason for such settings is to facilitate the air inlet pipes 741 at different heights to communicate with the air inlet chamber 75.

In this apparatus, to prevent cold air in the air inlet chamber 75 from entering into the heating chamber 2, a design of the bellows fabric 742 is used. In this way, a certain sealing effect of the heating chamber 2 may be achieved.

In this apparatus, a heating structure is disposed in the air outlet channel. The air outlet channel includes an air outlet tank 76 that communicates with the heating chamber 2. An electric heating tube 77 is disposed in the air outlet tank 76. A lower end of the air outlet tank 76 communicates with an output end of the fan 71.

The air drawn out by the fan 71 is blown out of the air outlet tank 76. In this case, the air needs to pass through the electric heating tube 77. The electric heating tube 77 may heat the air, and then the heated air enters into the heating chamber 2 from the air outlet 73.

A driving assembly 8 for driving the lifting printing platform 5 in this apparatus is not disposed in the printing chamber 1, so a structure of the driving assembly 8 may also relate to sealing of the heating chamber 2. Specifically, the driving assembly 8 includes a lifting block 82 and steel belt mechanisms 83 that are connected to the lifting printing platform 5. There are two steel belt mechanisms 83, and each of the steel belt mechanisms 83 includes upper and lower fixed pulleys 831 and a steel belt 832 disposed on the fixed pulleys 831. The lifting block 82 and the steel belt 832 are connected by using a fixed block 84.

A driving plate 85 is further disposed on the steel belt 832, and a driving apparatus is disposed on the driving plate 85. A through slot 81 for the lifting block 82 to move up and down is disposed on a rear end of the printing chamber 1.

The through slot 81 is disposed in order to facilitate the lifting block 82 to be capable of driving the lifting printing platform 5 located in the printing chamber 1 to lift up and down. In this case, to prevent heat from flowing out of the printing chamber 1 by using the through slot 81, this apparatus uses the steel belt mechanisms 83, and the entire through slot 81 may be covered by the steel belts 832 in the steel belt mechanisms 83, so as to prevent heat from flowing out of the through slot 81.

The driving apparatus of this apparatus may drive the driving plate 85 to lift up and down, and the driving plate 85 may drive the steel belts 832 to move on the fixed pulleys 831. In addition, the printing platform 5 can lift up and down by using the fixed block 84 and the lifting block 82.

Obviously, the embodiments are merely illustrative of the present disclosure as examples and are not intended to be limitation of embodiments of the present disclosure. For those of ordinary skill in the art, other variations or modifications in different forms may be made on the basis of the above description. All embodiments need not be exhaustive or otherwise impossible to be exhaustive herein. Obvious changes or variations which belong to the technical scheme of the present disclosure are still within the scope of protection of the present disclosure.

## Claims

1. A dynamic-volume high-temperature heating chamber apparatus for a 3D (three-dimensional) printer, comprising a cuboid printing chamber (1) and a lifting printing platform (5) that separates the printing chamber (1) into a heating chamber (2) and an expansion chamber (4), wherein a sealing structure is disposed between an edge of the lifting printing platform (5) and the printing chamber (1); and a printing head is disposed in the heating chamber (2), and a heating apparatus (7) is disposed in the heating chamber (2).

2. The dynamic-volume high-temperature heating chamber apparatus for a 3D printer according to claim 1, wherein the sealing structure comprises a sealing strip (6).

3. The dynamic-volume high-temperature heating chamber apparatus for a 3D printer according to claim 2, wherein the heating apparatus (7) comprises a fan (71), and an air inlet channel and an air outlet channel that communicate with the fan (71), and an air inlet (72) of the air inlet channel and an air outlet (73) of the air outlet channel are both disposed in the heating chamber (2).

4. The dynamic-volume high-temperature heating chamber apparatus for a 3D printer according to claim 3, wherein the air inlet channel comprises a lifting air inlet apparatus (74) and an air inlet chamber (75) that communicates with the lifting air inlet apparatus (74); the lifting air inlet apparatus (74) comprises an air inlet pipe (741) with two penetrating sides, a lower end of the air inlet pipe (741) is fastened to the lifting printing platform (5), a bellows fabric (742) is disposed on an upper end and a lower end of the air inlet pipe (741), and the other end of the bellows fabric (742) is fastened to the printing chamber (1); the air inlet chamber (75) is composed of a rectangular box body, one side of the air inlet chamber (75) communicates with the interior of the printing chamber (1), and the other side of the air inlet chamber (75) communicates with an air inlet of the fan (71).

5. The dynamic-volume high-temperature heating chamber apparatus for a 3D printer according to claim 4, wherein the air outlet channel comprises an air outlet tank (76) that communicates with the heating chamber (2), an electric heating tube (77) is disposed in the air outlet tank (76), and a lower end of the air outlet tank (76) communicates with an output end of the fan (71).

6. The dynamic-volume high-temperature heating chamber apparatus for a 3D printer according to claim 5, wherein a driving assembly (8) is further disposed on the lifting printing platform (5), and the driving assembly (8) comprises a lifting block (82) and steel belt mechanisms (83) that are connected to the lifting printing platform (5); there are two steel belt mechanisms (83), and each of the steel belt mechanisms (83) comprises upper and lower fixed pulleys (831) and a steel belt (832) disposed on the fixed pulleys (831); the lifting block (82) and the steel belt (832) are connected by using a fixed block (84);
a driving plate (85) is further disposed on the steel belt (832), and a driving apparatus is disposed on the driving plate (85); and
a through slot (81) for the lifting block (82) to move up and down is disposed on a rear end of the printing chamber (1).
